# EUROPEAN PATENT SPECIFICATION

(11) **EP 3 552 847 B1**
(45) Date of publication and mention of the grant of the patent: **07.09.2022**
(21) Application number: 19168073.5
(22) Date of filing: 09.04.2019
(51) Int. Cl.: B60C 11/13, B60C 11/03

(54) **TIRE**
REIFEN
PNEUMATIQUE

(30) Priority: 11.04.2018 JP 2018076338
(43) Date of publication of application: 16.10.2019
(73) Proprietor: Sumitomo Rubber Industries, Ltd., Kobe-shi, Hyogo-ken 651-0072 (JP)
(72) Inventor: NAKAJIMA, Koichi, Kobe-shi, Hyogo-ken 651-0072 (JP)
(74) Representative: Manitz Finsterwald Patent- und Rechtsanwaltspartnerschaft mbB

(56) References cited:
- EP-A2- 1 116 604
- JP-A- S58 136 502
- JP-A- 2002 211 211
- US-A- 2 327 057
- US-A- 3 770 040

## Description

### BACKGROUND OF THE INVENTION

### Field of the Invention

The present invention relates to a tire having, in a tread portion, a main groove that extends continuously in a tire circumferential direction.

### Description of the Background Art

Japanese Laid-Open Patent Publication No. 5-338412 discloses a tire having, in a tread portion, main grooves that extend continuously in the tire circumferential direction. The main groove has a groove wall surface that extends so as to be tilted in a direction in which the groove width is reduced from a groove bottom surface toward a tread surface.

The main groove exhibits good drainage performance also when the tread portion has been worn. However, in the tire, a corner portion of a land portion between a tread surface of the tread portion and the groove wall surface of the main groove tends to have an acute angle. The corner portion is deformed when contacting with the ground, and thus receives little shearing force and eventually receives only low wear energy. Therefore, the corner portion of the land portion tends to cause abnormal wear in which wear concentrates on other portions. Furthermore, the corner portion has problems that stiffness of the tread portion is reduced, and, in particular, steering stability is poor when the tire is a new one.

EP 1 116 604 A2 discloses a tire comprising a tread provided with three circumferentially extending fine grooves with enlarged groove bottom portions.

JP 2002 211211 A discloses a tire comprising features according to a related technology.

US 3 770 04 A also discloses a tire comprising features according to a related technology.

JP S58 136502 A discloses a tire having a tread portion in which a main groove includes a first portion extending in a depth direction of the main groove and having a constant width and a second portion extending in the depth direction and having an arc shape with increasing and decreasing width.

US 2 327 057 A discloses a tire comprising features according to a related technology.

### SUMMARY OF THE INVENTION

The present invention is made in view of the aforementioned circumstances, and a main object of the present invention is to provide a tire that can exhibit excellent wet performance over a long period of time while maintaining wear resistance and steering stability.

The present invention is directed to a tire according to claim 1. The tread portion has at least one main groove that extends continuously in a tire circumferential direction. The main groove includes a first portion that extends in a depth direction of the main groove so as to have an almost constant groove width, and a second portion that has a groove width which increases from the first portion toward a groove bottom, on a transverse cross-section orthogonal to a length direction of the main groove.

In the tire of the present invention, a depth from a tread surface of the tread portion to the boundary between the first portion and the second portion is 0.40 to 0.50 times a maximum depth of the main groove.

One groove wall of the main groove and the other groove wall of the main groove are line-symmetric with respect to a center line of the main groove in a tire axial direction, on the transverse cross-section of the tire of the present invention.

In the tire of the present invention, the main groove extends linearly along the tire circumferential direction.

In the tire of the present invention, the first portion preferably extends from a groove edge of the main groove in the depth direction of the main groove.

Preferably, at least one of groove walls of the second portion is smoothly curved and recessed outward in a width direction of the main groove, on the transverse cross-section of the tire of the present invention.

At least one of the groove walls of the second portion preferably includes a tilted portion that extends so as to be tilted in a direction in which a groove width of the main groove increases from a boundary between the first portion and the second portion, on the transverse cross-section of the tire of the present invention. An angle of the tilted portion relative to a normal line that passes through the groove edge of the main groove is preferably 10 to 70°.

In the tire of the present invention, a difference between a groove width of the first portion and a maximum groove width of the second portion is preferably 3.0 to 6.0 mm.

A groove bottom face of the main groove preferably extends linearly in the tire axial direction, on the transverse cross-section of the tire of the present invention.

In the tire of the present invention, the main groove preferably extends in the tire circumferential direction so as to maintain a shape of the transverse cross-section.

According to an alternative example not according to the invention, the main groove may zigzag in the tire circumferential direction.

An angle of a groove wall of the first portion relative to the line normal to a tread is preferably 0 to 5° on the transverse cross-section of the tire of the present invention.

An angle of each groove wall of the first portion relative to the line normal to the tread is preferably less than 1.0° on the transverse cross-section of the tire of the present invention.

The tread portion of the tire according to the present invention has at least one main groove that extends continuously in the tire circumferential direction. The main groove includes the first portion that extends in the depth direction of the main groove so as to have an almost constant groove width, and the second portion that has a groove width which increases from the first portion toward a groove bottom, on the transverse cross-section orthogonal to the length direction of the main groove.

When the tire as described above is a new tire in which the first portion of the main groove remains unworn, or is a tire in an initial stage of wear, a corner portion of a land portion which is defined by the main grooves is inhibited from having an acute angle. Therefore, while steering stability is maintained, abnormal wear in the tread portion can be reduced.

Furthermore, in a state where the first portion of the main groove is worn and lost, the tire of the present invention can exhibit excellent wet performance over a long period of time due to the second portion having the groove width that increases toward the groove bottom.

### BRIEF DESCRIPTION OF THE DRAWINGS

FIG. 1 is a transverse cross-sectional view of a tread portion of a tire according to one embodiment;
FIG. 2 is an enlarged plan view of a main groove shown in FIG. 1;
FIG. 3 is a cross-sectional view taken along a line A-A in FIG. 2;
FIG. 4 is an enlarged cross-sectional view of a main groove according to another embodiment of the present invention;
FIG. 5(a) is an enlarged cross-sectional view of a main groove of comparative example 1; and
FIG. 5 (b) is an enlarged cross-sectional view of a main groove of comparative example 2.

### DESCRIPTION OF THE PREFERRED EMBODIMENTS

An embodiment of the present invention will be described below with reference to the drawings.

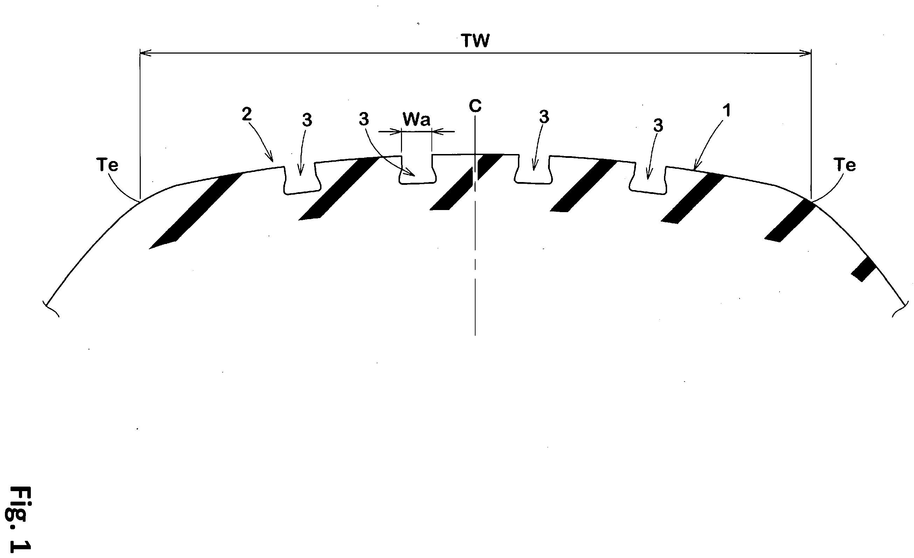

FIG. 1 is a transverse cross-sectional view of a tread portion 2 of a tire 1 according to the present embodiment. FIG. 1 shows a meridian cross-section that includes a tire rotation axis in a normal state of the tire 1. In the present embodiment, the tire 1 is preferably used as, for example, a pneumatic tire for passenger cars. However, the present invention is not limited to such an example. The tire 1 of the present invention may be used as, for example, a heavy duty tire.

The "normal state" represents a state in which a tire is mounted to a normal rim and is inflated with air to a normal internal pressure, and no load is applied to the tire. Hereinafter, unless otherwise specified, dimensions of components of the tire and the like are represented by values measured in the normal state.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, the tread portion 2 has four main grooves 3 that extend continuously in the tire circumferential direction.

A groove width Wa of each main groove 3 is 3.0% to 6.0% of a tread width TW. The groove width Wa is a length between groove edges that appear on a tread surface of the tread portion 2. The tread width TW is a distance, in the tire axial direction, from one of tread ends Te to the other of the tread ends Te in the normal state. In the case of the pneumatic tire for passenger cars, each main groove 3 preferably has a groove depth of, for example, 5 to 10 mm.

The tread end Te is a ground contact position at the outermost side in the tire axial direction in a state where a normal load is applied to the tire 1 in the normal state and the tire 1 is brought into contact with a plane at a camber angle of 0°.

The "normal load" represents a load that is defined by a standard, in a standard system including the standard with which the tire complies, for each tire, and is "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

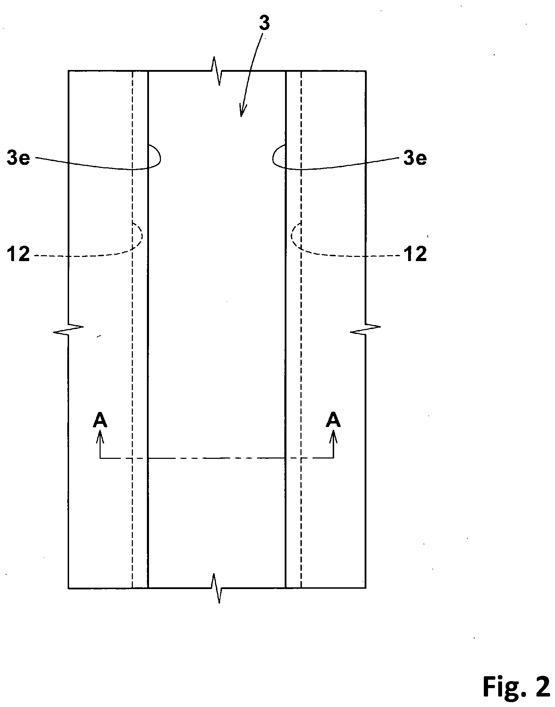

FIG. 2 is an enlarged plan view of the main groove 3. As shown in FIG. 2, the main groove 3 extends linearly along the tire circumferential direction. According to an alternative example not according to the invention, the main groove 3 may zigzag in the tire circumferential direction.

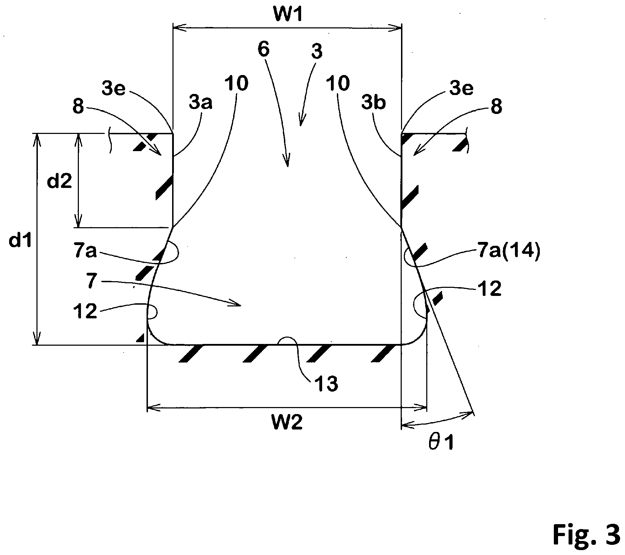

FIG. 3 is a cross-sectional view of the main groove 3 as taken along a line A-A. As shown in FIG. 3, on the transverse cross-section orthogonal to the length direction of the main groove 3, the main groove 3 includes a first portion 6 which extends in the depth direction of the main groove 3 so as to have an almost constant groove width, and a second portion 7 that has a groove width that increases from the first portion 6 toward the groove bottom. In consideration of, for example, shrinkage of the carcass and deformation of a groove wall in vulcanization molding, "the first portion 6 that extends so as to have an almost constant groove width" includes a mode in which an angle between one of the groove walls of the first portion 6 and the other of the groove walls thereof is 0 to 5°. In a more preferable mode, the angle is less than 1.0°. In the present embodiment, an angle of each groove wall of the first portion 6 relative to the line normal to the tread is 0 to 5° and more preferably less than 1.0°. The line normal to the tread is a line that passes through a groove edge of the main groove 3 and is orthogonal to the tread surface on the transverse cross-section of the tire. When a small angle is formed between one of the groove walls and the other of the groove walls, each groove wall of the first portion 6 is preferably tilted in the direction in which the groove width is reduced toward the groove bottom. In the present embodiment, one groove wall 3a of the first portion 6 and the other groove wall 3b thereof are disposed parallel to each other.

When the tire 1 of the present invention as described above is a new tire in which the first portion 6 of the main groove 3 remains unworn, or is a tire in an initial stage of wear, a corner portion 8 of a land portion which is defined by the tread surface of the tread portion 2 and the groove wall of the main groove 3 is inhibited from having an acute angle. Therefore, while steering stability is maintained, abnormal wear in the tread portion 2 can be reduced.

Furthermore, in a state where the first portion 6 of the main groove 3 is worn and lost, the tire of the present invention can exhibit excellent wet performance over a long period of time due to the second portion 7 having the groove width that increases toward the groove bottom.

The first portion 6 preferably extends, for example, from a groove edge 3e of the main groove 3 in the depth direction of the main groove 3. The first portion 6 having such a structure can assuredly maintain steering stability obtained in the case of the tire being a new one. Furthermore, the first portion 6 having such a structure contributes to assuredly increasing of an area of the tread surface of the tread portion 2 so that grip force can be made high, as compared to a groove of which the groove width is gradually reduced from the groove edge. Furthermore, in the first portion 6, the groove width is unlikely to change even when ground contact pressure acts, and pumping sound at the time of ground contact can be reduced, as compared to a groove of which the groove width is gradually reduced from the groove edge.

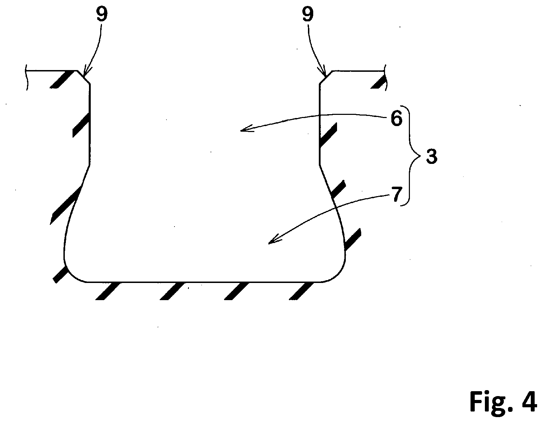

The main groove 3 of the present invention may include, for example, a chamfered portion 9 formed from a tilted surface, between the first portion 6 and the tread surface of the tread portion 2, as in another embodiment shown in FIG. 4.

As shown in FIG. 3, a depth d2 from the tread surface of the tread portion 2 to a boundary 10 between the first portion 6 and the second portion 7 is 0.40 to 0.50 times a maximum depth d1 of the main groove. The main groove 3 having such a structure allows well-balanced improvement of steering stability and wet performance. The main groove 3 having such a structure prevents a groove volume from being excessively great, and contributes to reduction of air column resonance sound.

In the second portion 7, for example, at least one of groove walls 7a is smoothly curved, and recessed outward in the width direction of the main groove 3. In the present embodiment, both the groove walls are smoothly curved and recessed. Furthermore, in the second portion 7, the groove width is gradually increased toward the groove bottom. The second portion 7 having such a structure facilitates removal of a main-groove-forming rib of a vulcanization mold from the tread portion 2 in vulcanization molding (hereinafter, this effect may be referred to as "improve demoldability").

In the present embodiment, particularly, the first portion 6 has a constant groove width toward the depth direction of the main groove. Therefore, when the rib of the vulcanization mold is removed from the tread portion 2, damage near the boundary 10 can be reduced. For example, when the groove width is gradually reduced toward the groove bottom in a region on the outer side of the second portion 7 in the tire radial direction, the direction in which the groove wall tilts is changed at the boundary 10. Therefore, a portion near the boundary 10 may be easily damaged in vulcanization molding.

At least one of the groove walls 7a of the second portion 7 includes a tilted portion 14 that extends so as to be tilted in a direction in which the groove width of the main groove 3 increases from the boundary 10 between the second portion 7 and the first portion 6. An angle θ1 of the tilted portion 14 relative to the normal line that passes through the groove edge 3e of the main groove 3 is preferably not less than 10°, more preferably not less than 20°, and even more preferably not less than 25°, and preferably not greater than 70°, more preferably not greater than 50°, and even more preferably not greater than 30°. The second portion 7 having such a structure exhibits the above-described effects while exhibiting excellent demoldability.

An outermost side portion 12 of the second portion 7 is positioned, for example, outward of the groove edge 3e of the main groove 3. For example, a maximum groove width W2 of the second portion 7 is preferably 1.15 to 1.25 times a groove width W1 of the first portion 6. The main groove 3 having such a structure exhibits excellent drainage performance while enhancing wear resistance.

In order to improve wet performance while demoldability is assured, a difference between the groove width W1 of the first portion 6 and the maximum groove width W2 of the second portion 7 is preferably not less than 3.0 mm and more preferably not less than 4.0 mm, and preferably not greater than 6.0 mm and more preferably not greater than 5.0 mm.

One groove wall 3a of the main groove 3 and the other groove wall 3b of the main groove 3 are line-symmetric with respect to the center line of the main groove 3 in the tire axial direction. The main groove 3 having such a structure allows the groove walls on both sides to be equally worn, and eventually allows wear resistance to be improved.

For example, a groove bottom face 13 of the main groove 3 preferably extends linearly in the tire axial direction. In the main groove 3 having such a structure, a portion, of the groove bottom face 13, near the center in the tire axial direction is unlikely to be bent, and the groove volume of the main groove 3 is unlikely to be reduced even in a state where stress in the tire axial direction acts on the tread portion 2. Therefore, cornering performance at a wet road surface is improved.

As shown in FIG. 2, the outermost side portion 12 of the second portion 7 preferably extends parallel to the groove edge 3e of the main groove 3.

In a more preferable mode, the entirety of the main groove 3 preferably extends in the tire circumferential direction so as to maintain the transverse cross-sectional shape described above. In the main groove 3 having such a structure, even when wear of the tread portion 2 is developed, the groove edge 3e that appears on the outer surface thereof maintains the linear shape so that uneven wear near the groove edge 3e can be reduced. However, the present invention is not limited to such an example. The main groove 3 may be formed, for example, so as to increase or reduce the groove width of the second portion 7 in the tire circumferential direction.

The tire according to one embodiment of the present invention has been described above in detail. However, the present invention is not limited to the above-described specific embodiment, and various modifications can be devised within the scope of the appended claims.

### [Examples]

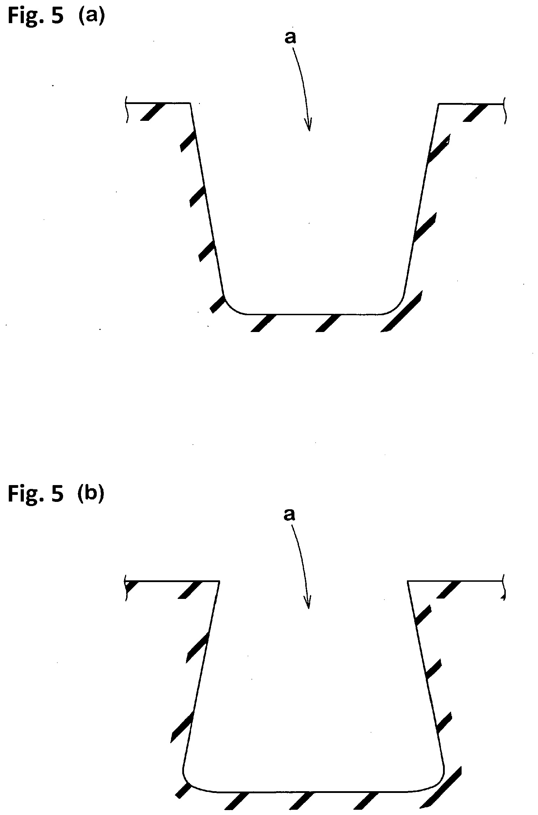

Pneumatic tires each having the above-described main groove and having the size of 185/65R15 were produced as sample tires based on the specifications indicated in Table 1. As comparative example 1, a tire that had a main groove having a cross-sectional shape shown in FIG. 5 (a) was produced as the sample tire. In the tire of comparative example 1, the groove width of the main groove a was gradually reduced from the groove edge of the main groove toward the groove bottom. As comparative example 2, a tire that had a main groove having a cross-sectional shape shown in FIG. 5 (b) was produced as the sample tire. In the tire of comparative example 2, the groove width of the main groove a was gradually increased from the groove edge of the main groove toward the groove bottom. In each comparative example, the groove volume of the main groove is equal to the groove volume of the main groove of example 1.

Each test tire was tested for steering stability, wet performance after wear, and presence or absence of abnormal wear. Specifications common to all the test tires and the test method are as follows.
Test vehicle: engine displacement of 2000 cc, front wheel drive vehicle
Position at which test tire was mounted: all wheels
Rim: 15×6.0J
Tire internal pressure: 220 kPa for front wheel, 210 kPa for rear wheel

### <Steering stability>

Sensory evaluation was made by a driver for steering stability when the test vehicle ran on a dry road surface in the case of each tire being new. The result is indicated as scores with the score of comparative example 1 being 100. The greater the value of the score is, the more excellent steering stability is.

### <Wet performance after wear>

Sensory evaluation was made by a driver for running performance on a wet road surface in a state where the tread portion was worn such that the depth of the main groove was 50% of the depth of the main groove in the case of each tire being new. The result is indicated as scores with the score of comparative example 1 being 100. The greater the value of the score is, the more excellent wet performance after wear is.

### <Presence or absence of abnormal wear>

Presence or absence of abnormal wear in the tread portion was confirmed after the vehicle ran on a dry road surface for 5000 km. "Good" represents absence of abnormal wear. "Poor" represents presence of such abnormal wear that the corner portion of the land portion remained unworn and wear concentrated on other portions.

The test results are indicated in Table 1.

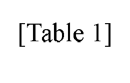

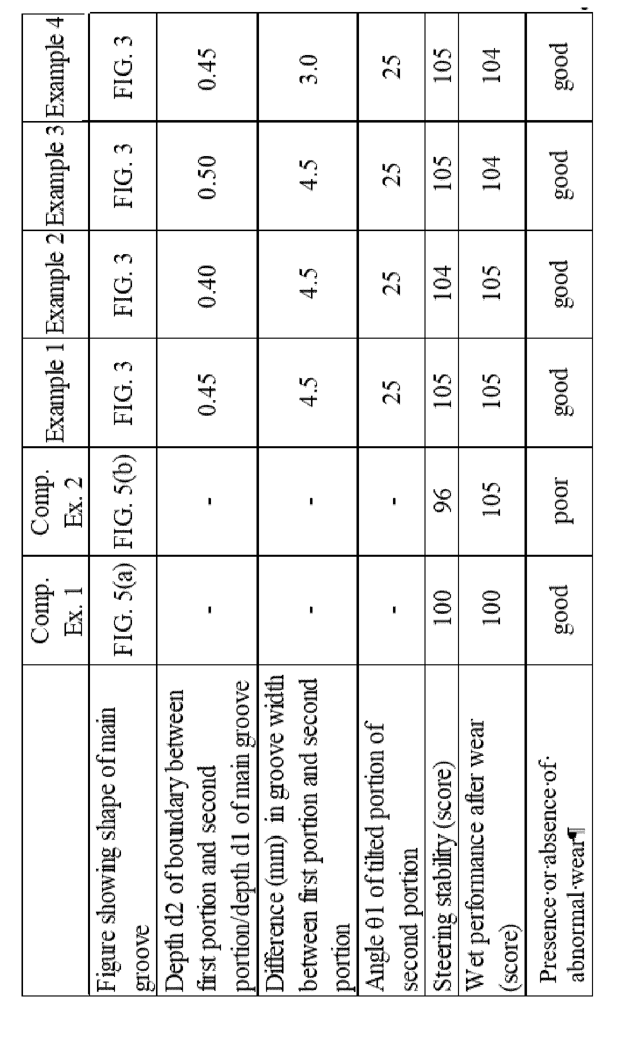

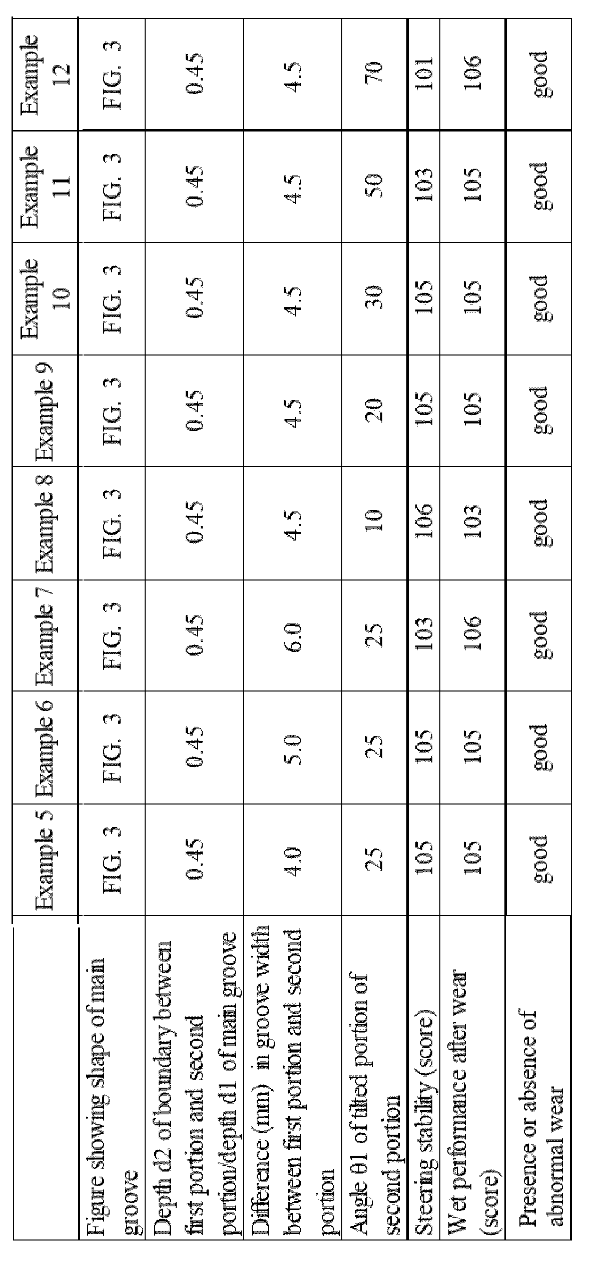

According to the test results, it was confirmed that the tires of examples exhibited excellent wet perfomance even in a worn state while maintaining steering stability obtained in the case of each tire being new. Furthermore, it was confirmed that the tires of examples allowed reduction of abnormal wear in the tread portions, and has excellent wear resistance.

## Claims

1. A tire (1) comprising
a tread portion (2), wherein
the tread portion (2) has four main grooves (3) extending continuously linearly along a tire circumferential direction, each main groove (3) includes a first portion (6) that extends in a depth direction of the main groove (3) so as to have an almost constant groove width, and a second portion (7) that has a groove width which increases from the first portion (6) toward a groove bottom, on a transverse cross-section orthogonal to a length direction of the main groove (3), and
one groove wall (3a) of the main groove (3) and the other groove wall (3b) of the main groove (3) are line-symmetric with respect to a center line of the main groove (3) in a tire axial direction, on the transverse cross-section,
wherein
a groove width (Wa) of each main groove (3), which is a length between groove edges that appear on a tread surface of the tread portion (2), is 3.0% to 6.0% of a tread width (TW), the tread width (TW) being a distance, in the tire axial direction, from one of tread ends (Te) to the other of the tread ends (Te) in the normal state, wherein a tread end (Te) is a ground contact position at the outermost side in the tire axial direction in a state where a normal load is applied to the tire (1) in the normal state and the tire (1) is brought into contact with a plane at a camber angle of 0°, the normal state being a state in which the tire (1) is mounted to a normal rim and is inflated with air to a normal internal pressure, and no load is applied to the tire (1), and
a depth (d2) from a tread surface of the tread portion (2) to the boundary (10) between the first portion (6) and the second portion (7) is 0.40 to 0.50 times a maximum depth (d1) of the main grooves (3).

2. The tire (1) according to claim 1, wherein the first portion (6) extends from a groove edge (3e) of the main grooves (3) in the depth direction of the main grooves (3).

3. The tire (1) according to claim 1 or 2, wherein at least one of groove walls (7a) of the second portion (7) is smoothly curved and recessed outward in a width direction of the main grooves (3), on the transverse cross-section.

4. The tire (1) according to any one of claims 1 to 3, wherein
at least one of the groove walls (7a) of the second portion (7) includes a tilted portion (14) that extends so as to be tilted in a direction in which a groove width of the main grooves (3) increases from a boundary (10) between the first portion (6) and the second portion (7), on the transverse cross-section, and
an angle of the tilted portion (14) relative to a normal line that passes through the groove edge (3e) of the main grooves (3) is 10 to 70°.

5. The tire (1) according to any one of claims 1 to 4, wherein a difference between a groove width (W1) of the first portion (6) and a maximum groove width (W2) of the second portion (7) is 3.0 to 6.0 mm.

6. The tire (1) according to any one of claims 1 to 5, wherein a groove bottom face (13) of the main grooves (3) extends linearly in the tire axial direction, on the transverse cross-section.

7. The tire (1) according to any one of claims 1 to 6, wherein the main grooves (3) extend in the tire circumferential direction so as to maintain a shape of the transverse cross-section.

8. The tire (1) according to any one of claims 1 to 7, wherein an angle of a groove wall of the first portion (6) relative to the line normal to a tread is 0 to 5° on the transverse cross-section.

9. The tire (1) according to any one of claims 1 to 8, wherein an angle of each groove wall of the first portion (6) relative to the line normal to the tread is less than 1.0° on the transverse cross-section.

## Patentansprüche

1. Reifen (1), umfassend
einen Laufflächenabschnitt (2), wobei
der Laufflächenabschnitt (2) vier Hauptrillen (3) aufweist, die sich kontinuierlich linear entlang einer Reifenumfangsrichtung erstrecken,
jede Hauptrille (3) in einem querverlaufenden Querschnitt rechtwinklig zu einer Längsrichtung der Hauptrille (3) einen ersten Abschnitt (6), der sich in einer Tiefenrichtung der Hauptrille (3) derart erstreckt, dass er eine nahezu konstante Rillenbreite aufweist, und einen zweiten Abschnitt (7) aufweist, der eine Rillenbreite aufweist, die von dem ersten Abschnitt (6) in Richtung eines Rillenbodens zunimmt, und
eine Rillenwand (3a) der Hauptrille (3) und die andere Rillenwand (3b) der Hauptrille (3) in dem querverlaufenden Querschnitt bezogen auf eine Mittellinie der Hauptrille (3) in einer Reifenaxialrichtung liniensymmetrisch sind,
wobei
eine Rillenbreite (Wa) jeder Hauptrille (3), die eine Länge zwischen Rillenkanten ist, die in einer Lauffläche des Laufflächenabschnitts (2) erscheinen, 3,0 % bis 6,0 % einer Laufflächenbreite (TW) beträgt, wobei die Laufflächenbreite (TW) eine Distanz in der Reifenaxialrichtung von einem von Laufflächenenden (Te) bis zu dem anderen der Laufflächenenden (Te) in dem Normalzustand ist, wobei ein Laufflächenende (Te) eine Bodenkontaktposition an der äußersten Seite in der Reifenaxialrichtung in einem Zustand ist, in dem eine Normallast auf den Reifen (1) in dem Normalzustand ausgeübt wird und der Reifen (1) mit einer Ebene unter einem Sturzwinkel von 0° in Kontakt gebracht ist, wobei der Normalzustand ein Zustand ist, in welchem der Reifen (1) an einer Standardfelge angebracht ist und mit Luft bis zu einem normalen Innendruck aufgepumpt ist und keine Last auf den Reifen (1) ausgeübt wird, und
eine Tiefe (d2) von einer Lauffläche des Laufflächenabschnitts (2) bis zu der Grenze (10) zwischen dem ersten Abschnitt (6) und dem zweiten Abschnitt (7) das 0,40- bis 0,50-fache einer maximalen Tiefe (d1) der Hauptrillen (3) beträgt.

2. Reifen (1) nach Anspruch 1, wobei sich der erste Abschnitt (6) von einer Rillenkante (3e) der Hauptrillen (3) in der Tiefenrichtung der Hauptrillen (3) erstreckt.

3. Reifen (1) nach Anspruch 1 oder 2, wobei zumindest eine von Rillenwänden (7a) des zweiten Abschnitts (7) in dem querverlaufenden Querschnitt glatt gekrümmt und in einer Breitenrichtung der Hauptrillen (3) nach außen zurückversetzt ist.

4. Reifen (1) nach einem der Ansprüche 1 bis 3, wobei
zumindest eine der Rillenwände (7a) des zweiten Abschnitts (7) in dem querverlaufenden Querschnitt einen geneigten Abschnitt (14) aufweist, der sich derart erstreckt, dass er in einer Richtung geneigt ist, in der eine Rillenbreite der Hauptrillen (3) von einer Grenze (10) zwischen dem ersten Abschnitt (6) und dem zweiten Abschnitt (7) zunimmt, und
ein Winkel des geneigten Abschnitts (14) relativ zu einer Normalenlinie, die durch die Rillenkante (3e) der Hauptrillen (3) verläuft, 10 bis 70° beträgt.

5. Reifen (1) nach einem der Ansprüche 1 bis 4, wobei eine Differenz zwischen einer Rillenbreite (W1) des ersten Abschnitts (6) und einer maximalen Rillenbreite (W2) des zweiten Abschnitts (7) 3,0 bis 6,0 mm beträgt.

6. Reifen (1) nach einem der Ansprüche 1 bis 5, wobei sich eine Rillenbodenfläche (13) der Hauptrillen (3) in dem querverlaufenden Querschnitt linear in der Reifenaxialrichtung erstreckt.

7. Reifen (1) nach einem der Ansprüche 1 bis 6, wobei sich die Hauptrillen (3) in der Reifenumfangsrichtung derart erstrecken, dass sie eine Form des querverlaufenden Querschnitts beibehalten.

8. Reifen (1) nach einem der Ansprüche 1 bis 7, wobei ein Winkel einer Rillenwand des ersten Abschnitts (6) in dem querverlaufenden Querschnitt relativ zu einer Linie rechtwinklig zu einer Lauffläche 0 bis 5° beträgt.

9. Reifen (1) nach einem der Ansprüche 1 bis 8, wobei ein Winkel jeder Rillenwand des ersten Abschnitts (6) in dem querverlaufenden Querschnitt relativ zu einer Linie rechtwinklig zu der Lauffläche kleiner als 1,0° ist.

## Revendications

1. Pneumatique (1) comprenant
une portion formant bande de roulement (2), dans lequel
la portion formant bande de roulement a quatre rainures principales (3) s'étendant en continu linéairement le long d'une direction circonférentielle du pneumatique,
chaque rainure principale (3) inclut une première portion (6) qui s'étend dans une direction de la profondeur de la rainure principale (3) de manière à avoir largeur de rainure pratiquement constante, et une seconde portion (7) qui a une largeur de rainure qui augmente depuis la première portion (6) vers un fond de rainure, sur une section transversale orthogonale à une direction longitudinale de la rainure principale (3), et
une paroi de rainure (3a) de la rainure principale (3) et l'autre paroi de rainure (3b) de la rainure principale (3) sont en symétrie d'axe par rapport à une ligne centrale de la rainure principale (3) dans une direction axiale du pneumatique, sur la section transversale,
dans lequel
une largeur de rainure (Wa) de chaque rainure principale (3), qui est une longueur entre des bords de rainure qui apparaissent sur une surface de bande de roulement de la portion formant bande de roulement (2), est de 3,0 % à 6,0 % d'une largeur de bande de roulement (TW), la largeur de bande de roulement (TW) étant une distance, dans la direction axiale du pneumatique, depuis l'une des extrémités de bande de roulement (Te) jusqu'à l'autre des extrémités de bande de roulement (Te) dans l'état normal, dans lequel une extrémité de bande de roulement (Te) est une position de contact au sol au niveau du côté le plus extérieur dans la direction axiale du pneumatique dans un état où une charge normale est appliquée sur le pneumatique (1) dans l'état normal et le pneumatique (1) est amené en contact avec un plan à un angle de cambrure de 0°, l'état normal étant un état dans lequel le pneumatique (1) est monté sur une jante normale et est gonflé avec de l'air à une pression interne normale, et aucune charge n'étant appliquée sur le pneumatique (1), et
une profondeur (d2) depuis une surface de bande de roulement de la portion formant bande de roulement (2) jusqu'à la frontière (10) entre la première portion (6) et la seconde portion (7) est 0,40 à 0,50 fois une profondeur maximum (d1) des rainures principales (3).

2. Bandage pneumatique (1) selon la revendication 1, dans lequel la première portion (6) s'étend depuis un bord de rainure (3e) des rainures principales (3) dans la direction de la profondeur des rainures principales (3).

3. Pneumatique (1) selon la revendication 1 ou 2, dans lequel l'une au moins des parois de rainure (7a) de la seconde portion (7) est incurvée en douceur et évidée vers l'extérieur dans une direction de la largeur des rainures principales (3), sur la section transversale.

4. Pneumatique (1) selon l'une quelconque des revendications 1 à 3, dans lequel
l'une au moins des parois de rainure (7a) de la seconde portion (7) inclut une portion inclinée (14) qui s'étend de manière à être inclinée dans une direction dans laquelle une largeur de rainure des rainures principales (3) augmente depuis une frontière (10) entre la première portion (6) et la seconde portion (7), sur la section transversale, et
un angle de la portion inclinée (14) relativement à une ligne normale qui passe à travers le bord de rainure (3e) des rainures principales (3) est de 10 à 70°.

5. Pneumatique (1) selon l'une quelconque des revendications 1 à 4, dans lequel une différence entre une largeur de rainure (W1) de la première portion (6) et une largeur de rainure maximum (W2) de la seconde portion (7) est de 3,0 à 6,0 mm.

6. Pneumatique (1) selon l'une quelconque des revendications 1 à 5, dans lequel une face de fond de rainure (13) des rainures principales (3) s'étend linéairement dans la direction axiale du pneumatique, sur la section transversale.

7. Pneumatique (1) selon l'une quelconque des revendications 1 à 6, dans lequel les rainures principales (3) s'étendent dans la direction circonférentielle du pneumatique de manière à maintenir une forme de la section transversale.

8. Pneumatique (1) selon l'une quelconque des revendications 1 à 7, dans lequel un angle d'une paroi de rainure de la première portion (6) relativement à la ligne normale par rapport à une bande de roulement est de 0 à 5° sur la section transversale.

9. Pneumatique (1) selon l'une quelconque des revendications 1 à 8, dans lequel un angle de chaque paroi de rainure de la première portion (6) relativement à la ligne normale par rapport à la bande de roulement est inférieur à 1,0° sur la section transversale.
